# FASCICULE DE BREVET EUROPEEN

(11) **EP 2 082 574 B1**
(45) Date de publication et mention de la délivrance du brevet: **16.05.2018**
(21) Numéro de dépôt: 07821833.6
(22) Date de dépôt: 25.10.2007
(51) Int. Cl.: H04N 7/16

(54) **PROCÉDÉ DE DÉTECTION D'UNE UTILISATION ANORMALE D'UN PROCESSEUR DE SÉCURITÉ**
VERFAHREN ZUR DETEKTION ABNORMER BENUTZUNG EINES SICHERHEITSPROZESSORS
METHOD FOR DETECTING THE ABNORMAL USE OF A SAFETY PROCESSOR

(30) Priorité: 27.10.2006 FR 0654599
(43) Date de publication de la demande: 29.07.2009
(73) Titulaire: Viaccess, 92057 Paris La Defense (FR)
(72) Inventeur: CHIEZE, Quentin, 75009 Paris (FR); CUABOZ, Alain, 75014 Paris (FR); GIARD, Alexandre, 61000 Alençon (FR); GRANET, Olivier, 75019 Paris (FR); NEAU, Louis, 35410 Chateaugiron (FR); ROGER, Matthieu, 94300 Vincennes (FR); TRONEL, Bruno, 92400 Courbevoie (FR)
(74) Mandataire: Ilgart, Jean-Christophe
(86) Numéro de dépôt international: PCT/EP2007/061470
(87) Numéro de publication internationale: WO 2008/049882

(56) Documents cités:
- EP-A- 1 447 976
- EP-A- 1 575 293

## Description

### DOMAINE TECHNIQUE

L'invention se situe dans le domaine du contrôle d'accès à des services multimédia et concerne plus spécifiquement un procédé de détection d'une utilisation anormale d'un processeur de sécurité sollicité par au moins un terminal de réception pour contrôler l'accès à un contenu numérique embrouillé fourni par au moins un opérateur audit terminal de réception.

L'invention concerne également un processeur de sécurité destiné à contrôler l'accès à un contenu numérique embrouillé fourni par au moins un opérateur à au moins un terminal de réception.

L'invention s'applique indépendamment de la nature du réseau support ou du type de contenus (TV en direct, programmes vidéo à la demande VOD, Personal video recorder (PVR)).

### ÉTAT DE LA TECHNIQUE ANTÉRIEURE

Deux utilisations illicites des systèmes de réception mettant en oeuvre un contrôle d'accès sont connues. La première a pour but d'analyser frauduleusement le fonctionnement du processeur de contrôle d'accès mis en oeuvre dans le récepteur en soumettant à ce dernier des messages syntaxiquement incorrects, par exemple à signature fausse, incomplets ou comportant des suites illicites de commandes, la deuxième vise à exploiter les ressources d'accès conditionnel du système de réception au-delà d'un usage normal autorisé. Cette deuxième utilisation peut être réalisée par le partage du système de réception considéré, et en particulier de son processeur de sécurité (typiquement, card sharing), ou par partage ou redistribution des mots de contrôle (CW sharing).

Plus particulièrement, dans le cas d'une utilisation partagée des ressources du système de réception, plusieurs terminaux sollicitent le processeur de sécurité de ce dernier via un réseau de communication bidirectionnel en soumettant à ce dernier des messages syntaxiquement corrects mais en nombre ou diversité excessifs.

L'invention a pour but de lutter contre les formes de piratage décrites ci-dessus.

L'invention s'applique particulièrement, mais non exclusivement, lorsque l'interface entre le processeur de sécurité et le terminal n'est pas protégée.

Le document EP 1 447 976 A1 décrit une méthode pour empêcher le partage d'un processeur de sécurité par plusieurs terminaux.

Cette méthode consiste à mesurer les temps séparant la soumission de deux messages ECM (pour Entitlement Control Message) successifs, et à vérifier que le cadencement des traitements des messages ainsi observé est conforme à des schémas de cadencement préétablis.

Cette méthode ne permet pas de prendre en compte les perturbations dans l'enchaînement des traitements des messages ECM car, dans la réalité, la soumission des messages ECM au processeur de sécurité dépend notamment :
- de l'organisation de rattachement de ces messages ECM aux programmes, selon que l'accès à un programme dépend d'une condition d'accès globale, ou de plusieurs conditions d'accès pour chaque composante vidéo, audio ou autres,
- des capacités offertes par les décodeurs de traiter un seul programme ou plusieurs simultanément comme dans le cas de récepteurs multi-tuner permettant d'enregistrer un programme pendant la visualisation d'un autre,
- des habitudes des utilisateurs dont les « zapping » répétés provoquent une rupture dans l'enchaînement régulier des traitements des messages ECM.
Le document EP15755293 décrit un module de sécurité portable recevant une séquence de messages de commande à des intervalles distincts et les analyse. Une pénalité est appliquée en affectant des temps morts au processeur jusqu'au blocage. Ce procédé prend en compte les habitudes de zapping et la présence de plusieurs dans l'appareil. Un redémarrage du module entraîne aussi une pénalité. Un autre but de l'invention est de pallier les inconvénients de l'art antérieur décrits ci-dessus.

### EXPOSÉ DE L'INVENTION

L'invention préconise un procédé de détection d'une utilisation anormale d'un processeur de sécurité sollicité par au moins un terminal de réception pour contrôler l'accès à un contenu numérique embrouillé fourni par au moins un opérateur audit terminal de réception dans lequel, chaque sollicitation du processeur de sécurité consiste à soumettre à celui-ci un message de contrôle d'accès ECM associé au contenu embrouillé et transportant un mot de contrôle CW et la description d'au moins une condition d'accès afin de fournir au terminal le mot de contrôle pour désembrouiller le contenu,

Ce procédé comporte les étapes suivantes :
- analyser l'utilisation du processeur de sécurité pendant une période d'observation T_{obs} prédéfinie comportant une période d'activité T_{Act} dudit processeur de sécurité constituée par cumulation d'une pluralité de durées d'activité successives séparées par une durée minimale T_{InaMin} de période d'inactivité dudit processeur de sécurité,
- compter à partir de ladite analyse le nombre N_{Ecm} de messages ECM traités par le processeur de sécurité pendant la période d'activité T_{act},
- déterminer la valeur moyenne M_{ECM} du nombre de sollicitations par unité de temps dudit processeur de sécurité pendant ladite période d'activité T_{Act},
- comparer ladite valeur moyenne M_{ECM} à un seuil Sₘₐₓ prédéfini, et,
- si la valeur moyenne M_{ECM} est supérieure au seuil Sₘₐₓ, appliquer audit terminal une sanction dont le niveau de sévérité croît graduellement,
   et, à une date courante t_{c}, le comptage du nombre N_{ECM} de messages ECM contemporains traités avec succès comporte les opérations suivantes :
   - comparer la date t à la date (t_{C}-T_{Diff}), T_{Diff} représentant un retard minimal préalablement défini séparant la date t et la date courant t_{C},
   - incrémenter le nombre N_{ECM} si la date (t_{C}-T_{Diff}) est inférieure ou égale à la date t de diffusion de ce message ECM, sinon maintenir le nombre N_{ECM} à la valeur courante,
   - si la date t est comprise entre la date courante t_{C} et la date t_{C}+T_{InaMin}, incrémenter la période d'activité T_{Act} de la valeur (t-t_{C}), sinon maintenir la période d'activité T_{Act} à la valeur courante.

Du fait que l'étape de comparaison utilise la valeur moyenne M_{ECM} du nombre de sollicitations par unité de temps, la méthode selon l'invention est de nature statistique et permet de ne pas être faussée par des perturbations localisées dans la structure temporelle des programmes traités et des variations des comportements des utilisateurs.

Selon une caractéristique de l'invention, au cours de la période d'observation T_{Obs}, la valeur moyenne M_{ECM} est déterminée pendant une période d'activité T_{Act} dudit processeur de sécurité constituée par cumulation d'une pluralité de durées d'activité successives séparées par une durée minimale T_{InaMin} d'inactivité dudit processeur de sécurité.

Une période d'activité représente un intervalle de temps cumulé pendant lequel un processeur de sécurité est sollicité par plages temporelles continues. Elle doit avoir une durée minimale T_{ActMin} pour garantir le caractère significatif de l'analyse. Le respect de cette durée minimale permet de réduire le risque de détecter comme abusive une utilisation ponctuellement importante, bien que normale et licite du processeur de sécurité. Dans un exemple, chaque sollicitation du processeur de sécurité consiste à soumettre à celui-ci un message de contrôle d'accès ECM associé au contenu embrouillé et transportant un mot de contrôle CW et la description d'au moins une condition d'accès.

L'analyse de l'utilisation du processeur de sécurité comporte dans ce cas les étapes suivantes :
- déterminer le nombre N_{Ecm} de messages ECM traités par le processeur de sécurité pendant la période d'activité T_{act},
- calculer le rapport M_{ECM} = N_{Ecm}/T_{Act},
- comparer le rapport M_{ECM} à la valeur seuil Sₘₐₓ,
- appliquer la sanction si la valeur moyenne M_{ECM} est supérieur au seuil Sₘₐₓ.
Dans cet exemple, l'analyse de l'utilisation du processeur de sécurité comporte les opérations suivantes :
à une date courante t_{c},
- déterminer, d'une part, les messages ECM ayant une date de diffusion contemporaine de ladite date courante t_{c} et qui sont soumis au processeur de sécurité en vue d'une première utilisation d'un contenu, et d'autre part, les messages ECM ayant une date de diffusion antérieure à la date courante t_{c} et qui sont soumis au processeur de sécurité en vue d'une réutilisation d'un contenu,
- mesurer la période d'activité T_{Act} du processeur de sécurité pendant laquelle il traite des messages ECM contemporains successifs,
- compter le nombre N_{ECM} de messages ECM contemporains au moins tant que la période d'activité T_{Act} est inférieure à une durée minimale T_{ActMin} prédéfinie.
Dans un exemple, à la date t_{c}, la détermination d'un message ECM ancien est réalisée par comparaison de la date t de traitement de ce message ECM à la date (t_{C}-T_{Diff}), T_{Diff} représentant un retard minimal préalablement défini séparant la date t et la date t_{c}. Dans un exemple, le comptage du nombre N_{ECM} de messages ECM contemporains traités avec succès comporte les opérations suivantes :
- comparer la date t à la date (t_{C}-T_{Diff}),
- incrémenter le nombre N_{ECM} si la date (t_{C}-T_{Diff}) est inférieure ou égale à la date t, sinon maintenir le nombre N_{ECM} à la valeur courante,
- incrémenter la période d'activité T_{Act} de la valeur (t-t_{C}) si la date t est comprise entre la date t_{C} et la date t_{C}+T_{InaMin}, sinon maintenir la période d'activité T_{Act} à la valeur courante.

Selon une autre caractéristique avantageuse, la sanction est appliquée graduellement selon les étapes suivantes :
- d'abord la sanction est appliquée avec un niveau de sévérité nᵢ un nombre de fois prédéterminé Rᵢ,
- ensuite la sanction est appliquée avec un niveau de sévérité suivant nᵢ₊₁ un nombre de fois prédéterminé Rᵢ₊₁,
- enfin la sanction maximale est appliquée quand le dernier niveau nᵢₘₐₓ est atteint.
Dans un exemple, la sanction comporte un premier niveau consistant en un blocage temporaire de la réception du contenu, un deuxième niveau consistant en un blocage de la réception du contenu avec obligation de contacter l'opérateur fournissant ledit contenu, et un troisième niveau consistant en un blocage définitif de la réception dudit contenu.

Préférentiellement, l'analyse de l'utilisation du processeur de sécurité est effectuée par un logiciel selon la revendication 10 intégré audit processeur de sécurité. Dans un exemple, ce dernier comporte :
- un premier module pour analyser son utilisation pendant une période d'observation T_{obs} prédéfinie,
- un deuxième module pour déterminer à partir de ladite analyse la valeur moyenne M_{ECM} du nombre de sollicitations par unité de temps dudit processeur de sécurité pendant ladite période d'observation T_{obs} et pour comparer ladite valeur moyenne M_{ECM} à un seuil Sₘₐₓ prédéfini, et
- un troisième module pour appliquer audit terminal une sanction dont le niveau de sévérité croît graduellement si la valeur moyenne M_{ECM} est supérieure au seuil Sₘₐₓ.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- la figure 1 représente schématiquement un organigramme illustrant le comptage de la valeur moyenne du nombre de sollicitations par unité de temps dudit processeur de sécurité pendant la période d'observation T_{obs},
- la figure 2 illustre schématiquement les étapes d'analyse et de sanction selon l'invention.

### EXPOSÉ DÉTAILLÉ DE MODES DE RÉALISATION PARTICULIERS

L'invention sera décrite dans un contexte de diffusion par un opérateur de programmes audiovisuels protégés par un système d'accès conditionnel (CAS). Ces programmes sont destinés à plusieurs terminaux d'abonnés munis chacun d'un processeur de sécurité, typiquement une carte à puce.

Dans ce contexte, le contrôle par l'opérateur de l'accès à un programme embrouillé s'effectue en conditionnant l'accès au contenu à la détention par le terminal d'un mot de contrôle CW et à la disponibilité d'une autorisation commerciale. A cet effet, l'opérateur attache au contenu une condition d'accès qui doit être remplie par l'abonné pour pouvoir accéder à ce contenu. La transmission aux terminaux d'abonnés des mots de contrôle CW et de la description de la condition d'accès est réalisée via des messages de contrôle d'accès spécifiques ECM (pour Entitlement Control Message). Au niveau de chaque terminal, les messages ECM sont soumis au processeur de sécurité pour être vérifiés quant à leur sécurité. Après vérification par le processeur de sécurité de la validité de ces messages, la condition d'accès qu'ils transportent est comparée aux titres d'accès présents dans une mémoire non volatile du processeur de sécurité. De façon connue en soi, ces titres d'accès sont préalablement reçus par le terminal via des messages de contrôle d'accès EMM (pour Entitlement Management Message). Si la condition d'accès est remplie par un de ces titres d'accès, le processeur de sécurité restitue par déchiffrement le mot de contrôle CW et le fournit au terminal, permettant ainsi le désembrouillage des contenus. De façon connue en soi, les messages ECM et EMM sont protégés par des modalités cryptographiques, mettant en oeuvre des algorithmes et des clés pour garantir l'intégrité de ces messages, leur authenticité et la confidentialité des données sensibles qu'ils peuvent transporter, et la mise à jour de ces clés notamment est assurée par des messages de gestion EMM spécifiques à la sécurité.

Il est d'usage de modifier la valeur aléatoire du mot de contrôle plus ou moins fréquemment, selon des stratégies variables choisies selon le contexte. Par exemple, un mot de contrôle peut être modifié toutes les 10 secondes, de façon classique, en télévision diffusée ou, à l'extrême, à chaque film uniquement en Video On Demand avec particularisation individuelle par abonné.

La mise en oeuvre du procédé dans ce contexte a pour but de permettre au processeur de sécurité de détecter toute utilisation abusive dont il est l'objet et d'y réagir. L'utilisation considérée ici est celle contrôlant l'accès aux contenus, représentée donc par le traitement des messages ECM par le processeur de sécurité.

Pour détecter une utilisation abusive, on mesure statistiquement un paramètre représentatif de l'utilisation du processeur de sécurité et on compare ce paramètre avec une valeur de seuil prédéfinie représentative d'une utilisation normale dudit processeur de sécurité.

La mesure de l'utilisation du processeur de sécurité consiste à analyser les sollicitations de ce processeur de sécurité pendant une période d'observation T_{obs} prédéfinie, puis à déterminer, à partir de ladite analyse, la valeur moyenne M_{ECM} du nombre de sollicitations par unité de temps pendant ladite période d'observation T_{obs}.

La comparaison de ladite valeur moyenne M_{ECM} à un seuil Sₘₐₓ prédéfini permet de détecter une utilisation abusive du processeur de sécurité sur la période d'observation T_{obs} considérée.

L'établissement du seuil Sₘₐₓ est réalisé par examen du comportement moyen d'utilisateurs pendant une durée significative d'observation.

Afin de couvrir au moins un cycle caractéristique d'utilisation du terminal de réception par l'utilisateur final, on définit une période d'activité du processeur de sécurité, pendant la période d'observation T_{obs}, représentant un intervalle de temps pendant lequel ce dernier est sollicité par plages temporelles continues, que ce soit de manière licite ou illicite. On définit également une durée minimum d' activité T_{ActMin} représentant la durée à atteindre par la période d'activité pour garantir le caractère significatif de l'analyse de l'utilisation du processeur de sécurité pendant la période d'activité. Le respect de cette durée minimale permet de minimiser le risque de détecter comme abusive une utilisation ponctuellement importante, bien que globalement normale de la carte. En effet, une utilisation normale peut présenter, typiquement en cas de zapping intense, des pics temporaires de sollicitation analogue à la sollicitation de la carte dans un contexte d'utilisation abusive.

On définit également une durée minimum d'inactivité T_{InaMin} représentant la durée écoulée depuis le dernier message ECM traité avec succès à au delà de laquelle on considère que la période d'activité précédente est terminée.

Par ailleurs afin de déterminer, à une date courante t_{c} correspondant au dernier traitement avec succès d'un message ECM, d'une part, les messages ECM contemporains de cette date courante t_{c} soumis au processeur de sécurité en vue d'une première utilisation d'un contenu, d'autre part, les messages ECM anciens par rapport à la date t_{c} soumis au processeur de sécurité en vue d'une réutilisation d'un contenu, on désigne par le paramètre T_{Diff} la durée minimale séparant la date d'un message ECM ancien de la date courante, et on considère qu'un message ECM est soumis au processeur de sécurité en vue d'une réutilisation d'un contenu si la date de ce message ECM est antérieure à t_{c} d'une durée supérieure ou égale à T_{Diff}.

Notons que la date de diffusion d'un message ECM peut être déterminée par diverses solutions techniques connues en soi. Par exemple, elle est inscrite dans ce message ECM, avec la condition d'accès et le mot de contrôle, par le générateur de messages ECM, ECM-G et est extraite par le processeur de sécurité lors du traitement de ce message ECM.

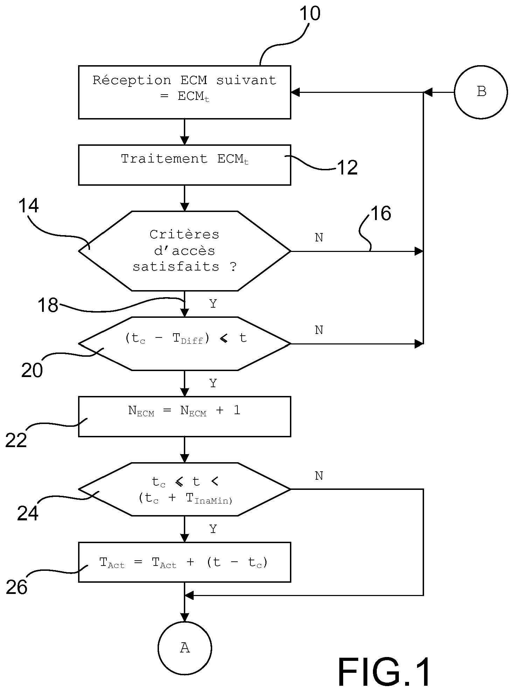

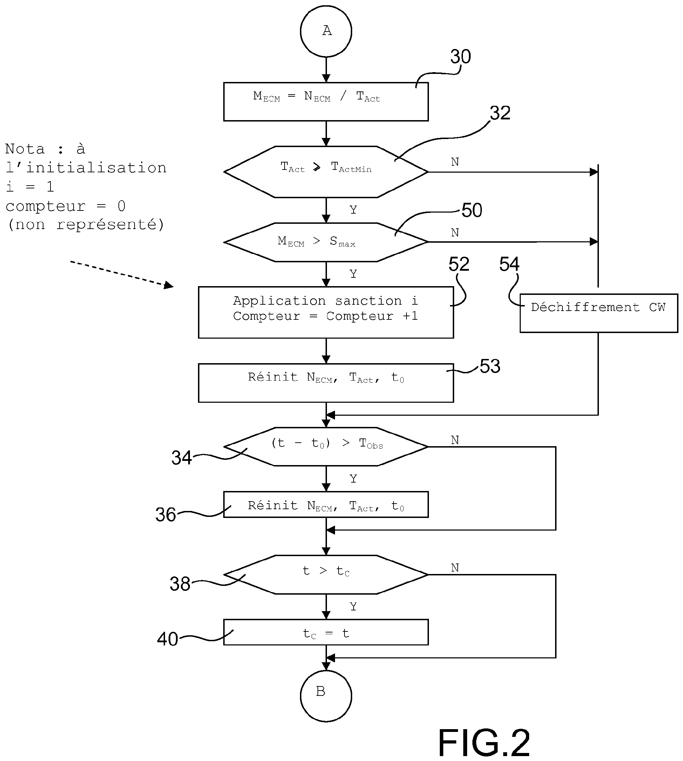

Les étapes du procédé selon l'invention seront décrites ci-après en référence aux figures 1 et 2.

La figure 1 illustre les étapes de comptage du nombre N_{Ecm} de messages ECM traités par le processeur de sécurité pendant une période d'activité T_{Act} et la mesure quasi-simultanée de ladite période d'activité T_{act}.

En référence à la figure 1, à une date courante t_{c} durant une période d'observation T_{obs} débutant à l'instant tₒ, le processeur de sécurité reçoit un message ECMₜ ayant pour date de diffusion t (étape 10).

A l'étape 12, le processeur de sécurité analyse la syntaxe, l'authenticité et l'intégrité du message ECMₜ puis en détermine la date t et les critères d'accès.

A l'étape 14, le processeur de sécurité vérifie la validité des critères d'accès, ainsi que l'authenticité et l'intégrité du message.

Si ces derniers ne sont pas satisfaits ou si le message n'est pas authentique ou intègre, le processeur de sécurité analyse le message ECM suivant (flèche 16).

Si les critères d'accès sont satisfaits (flèche 18), le processeur de sécurité traite le message ECMₜ et compare, à l'étape 20, la date t de ce message ECMₜ à la date t_{c}-T_{diff} pour déterminer si le message ECMₜ est soumis pour une première utilisation du contenu ou pour une ré-utilisation après enregistrement de celui-ci.

Si t_{c}-T_{diff} est inférieure à t, autrement dit, si le message ECMₜ concerne une première exploitation du programme embrouillé, le processeur de sécurité incrémente le nombre de messages ECM traités d'une unité à l'étape 22.

Si la date t du message ECMₜ est comprise entre les dates t_{c} et t_{c}+T_{InaMin} (étape 24), le processeur de sécurité conclut que la période d'activité précédente n'est pas encore terminée et, à l'étape 26, la durée de la période d'activité courante T_{Act} est incrémentée de la durée t-t_{c}.

La détermination de la période d'activité T_{Act} et le comptage du nombre N_{Ecm} de messages ECM traités par le processeur de sécurité sont ainsi effectués jusqu'à la fin de la période d'observation T_{obs}.

La figure 2 illustre schématiquement les étapes d'analyse de l'utilisation du processeur de sécurité et de sanction selon l'invention.

A l'étape 30, le processeur de sécurité calcule le rapport M_{ECM}=N_{ECM}/T_{act}, dans lequel N_{Ecm} représente le nombre de messages ECM comptés et T_{Act} représente la durée totale la période d'activité pendant la période d'observation T_{obs}.

A l'étape 32, le processeur de sécurité vérifie si T_{Act} est supérieure ou égale à une durée T_{ActMin} prédéfinie. Cette étape a pour but de vérifier que la période d'activité T_{Act} est suffisante pour garantir le caractère significatif de l'analyse.

Si T_{Act} est inférieur à T_{ActMin}, le processeur de sécurité déchiffre à l'étape 54 le mot de contrôle contenu dans le message ECMₜ puis vérifie à l'étape 34 si la durée d'observation T_{obs} est finie.

Dans l'affirmative, le processeur de sécurité réinitialise (étape 36) les valeurs N_{Ecm}, T_{act}, et t₀.

Dans la négative, ces valeurs ne sont pas réinitialisées.

Dans les deux cas, le processus se poursuit par l'étape 38 consistant à vérifier si la date t du message ECMₜ est postérieure à la date courante t_{c}.

Si oui, la date t est affectée à la date courante t_{c}.

Le processus se poursuit à partir de l'étape 10 du comptage(figure 1).

Si T_{Act} est supérieure ou égale à T_{ActMin}, le processeur de sécurité vérifie (étape 50) si la valeur moyenne calculée M_{ECM} est supérieure au seuil Sₘₐₓ.

Si oui, une sanction est appliquée et le nombre n de sanctions et/ou le niveau de la sanction appliquée est incrémenté (étape 52), et les valeurs N_{ECM}, T_{Act} et t_{O} sont réinitialisées (étape 53).

Sinon, le mot de contrôle CW est déchiffré et transmis au terminal pour permettre le désembrouillage du contenu (étape 54).

Le procédé se poursuit ensuite par l'étape 34 consistant à vérifier si la durée (t-t_{O}) est supérieure à la durée T_{Obs} de la période d'observation.

Dans l'affirmative, le processeur de sécurité réinitialise (étape 36) les valeurs N_{Ecm}, T_{act}, et t₀.

Dans la négative, ces valeurs ne sont pas réinitialisées.

Dans les deux cas, le processus se poursuit par l'étape 38 consistant à vérifier si la date t du message ECMₜ est postérieure à la date courante t_{c}.

Si la date t de diffusion du message ECMₜ est postérieure à la date t_{c}, l'étape 40 la date t est affectée à la date courante t_{c}, et le procédé se poursuit à partir de l'étape 10 du comptage (figure 1).

La gestion de la sanction à l'étape 52 comprend l'incrémentation du nombre n de sanctions et/ou du niveau de la sanction. Cette gestion de sanction est caractéristique de l'invention. Du fait que le procédé est une analyse statistique des sollicitations du processeur de sécurité basée sur une modélisation préalable comme cela sera décrit plus loin, définir une seule sanction et l'appliquer dès la détection d'usage anormal est excessif et peut rendre le procédé finalement inopérant. Afin de bénéficier de la progressivité apportée par l'analyse statistique dans la détection de l'utilisation abusive du processeur, la gestion des sanctions la mieux adaptée et donc inhérente au procédé est une gestion progressive. Cette gestion définit plusieurs niveaux de sanctions de sévérité croissante et appliquées progressivement par paliers.

A titre d'exemple, une première détection d'usage abusif du processeur de sécurité fait interrompre l'accès au contenu en en empêchant le désembrouillage. Quand cette sanction de sévérité faible a été répétée un certain nombre de fois pour cause de confirmation de l'usage abusif, une autre sanction de sévérité moyenne est appliquée qui consiste à bloquer temporairement le terminal avec obligation à l'usager de contacter son opérateur pour débloquer le terminal. Quand cette deuxième sanction a été appliquée un certain nombre de fois en raison de la persistance de l'usage abusif, une sanction ultime de sévérité forte est appliquée qui consiste à invalider de façon définitive le processeur de sécurité.

Le processus décrit ci-dessus met en oeuvre des paramètres fréquemment mis à jour dans une mémoire du processeur de sécurité de type EEPROM (pour Electrically Erasable Programmable Read-Only Memory) afin d'assurer la continuité de l'analyse en cas d'interruption de l'alimentation du processeur de sécurité.

Or, ce type de mémoire supporte un nombre limité d'écritures. Aussi, afin de compenser cette restriction technologique, les paramètres N_{ECM}, t_{C} et T_{Act} qui sont le plus sollicités par les calculs sont stockés en mémoire non permanente (RAM) et sauvegardés régulièrement dans la mémoire EEPROM.

A cet effet, on définit les nouveaux paramètres suivants :
- le nombre N_{Buf} de messages ECM traités avec succès depuis le dernier transfert des paramètres N_{ECM}, t_{C} et T_{Act} dans la mémoire EEPROM.
- le nombre Nₘₐₓ représentant un seuil maximum du nombre N_{Buf} qui déclenche la mise à jour en mémoire EEPROM des paramètres N_{ECM}, t_{C} et T_{Act}.

Les paramètres N_{ECM}, t_{c} et T_{Act} sont alors gérés de la façon suivante :
Lors de la mise sous tension du processeur de sécurité, ou de l'activation de l'analyse de l'utilisation du processeur de sécurité, les paramètres N_{ECM}, t_{C} et T_{Act} sont créés et inscrits avec leur valeur d'initialisation en mémoire EEPROM s'ils ne l'ont encore jamais été auparavant.

Après mise sous tension du processeur de sécurité, ou à l'activation de l'analyse de l'utilisation de ce processeur de sécurité :
∘ les paramètres N_{ECM}, t_{C} et T_{Act} sont chargés en mémoire RAM
∘ toute incrémentation de ces paramètres se fait en mémoire RAM
∘ si N_{Buf} > Nₘₐₓ, leurs valeurs sont en outre mises à jour en mémoire EEPROM.

Ainsi, chaque fois que le nombre de messages ECM traités avec succès pendant la durée T_{obs} augmente de la valeur de seuil Nₘₐₓ prédéfinie, les paramètres N_{ECM}, t_{C} et T_{Act} sont transférés dans une mémoire EEPROM.

Notons que si les valeurs N_{ECM}, t_{C} et T_{Act} sont connues, un intervenant malintentionné peut rendre ineffectif le procédé en mettant régulièrement hors tension le processeur de sécurité. Les valeurs mémorisées sont ainsi perdues, empêchant d'analyser l'utilisation du processeur de sécurité et permettant ainsi au pirate de le partager en toute impunité.

Pour éviter ce contournement illicite du procédé, une solution est de télécharger dans le processeur de sécurité une nouvelle valeur plus faible du seuil Nₘₐₓ. Une autre solution consiste à incrémenter, après chaque mise sous tension, les valeurs de T_{Act} et N_{ECM} respectivement de T_{Act, ini} (Correction du temps d'activité) et N_{ECM, ini} (Correction du nombre de messages ECM traités avec succès).

Ceci revient à baisser la valeur du seuil Nₘₐₓ.

Dans un mode préféré de réalisation, le paramétrage et l'activation de l'analyse sont programmables par l'opérateur par envoi de message EMM.

Ce paramétrage peut également être réalisé en phase de personnalisation de la carte.

Il consiste à :
- choisir, parmi une liste donnée, la sanction de chacun des niveaux de sévérité moyenne et forte;
- fixer les nombres de répétitions des sanctions de sévérités faible et moyenne.

En outre, ledit message EMM transporte au moins un des paramètres suivants :
- la durée T_{obs} de la période d'observation,
- la durée minimum d'activité T_{ActMin},
- le retard T_{Diff},
- la durée minimum d' inactivité T_{InaMin},
- la valeur du seuil Sₘₐₓ,
- la valeur du seuil N_{Buf}.

Ces paramètres sont complétés par les paramètres suivants relatifs à la mise en oeuvre du procédé:
Nₘₐₓ : Seuil de mémorisation exprimé en nombre de messages ECM,
T_{Act,ini} : Correction du temps d'activité exprimée en secondes,
N_{ECM,ini} : correction du nombre de messages ECM traités avec succès,
T_{SFA} : Durée, exprimée en secondes, du non traitement des ECM au titre de la sanction de niveau de sévérité faible,
R_{SFA} : Nombre de répétitions de la sanction de niveau de sévérité faible,
R_{SMO} : Nombre de répétitions de la sanction de niveau de sévérité moyenne.

Nous décrivons ci-après un exemple d'un tel paramétrage résultant d'une modélisation de l'usage normal du processeur de sécurité.

Il est considéré que le comportement d'un utilisateur varie selon le jour de la semaine, mais se répète d'une semaine à l'autre.

L'analyse repose par ailleurs sur les hypothèses suivantes :
- Hypothèse de zapping : 1 message ECM supplémentaire à chaque zapping,
- Zapping Faible : 20 messages ECM en plus/heure, soit 1 toutes les 3 minutes,
- Zapping Moyen : 60 messages ECM en plus/heure, soit 1 par minute,
- Zapping Normal : 120 messages ECM en plus/heure, soit toutes les 30 secondes,
- Zapping Surabondant : 1000 messages ECM en plus/heure, soit toutes les 3 secondes.

Dans l'exemple de réalisation qui sera décrit, l'analyse a été expérimentée sur une période d'observation de 7 jours, puis sur une période d'observation de 15 jours. Dans le cas de programmes comportant plusieurs composantes embrouillées, seul est réalisé le comptage de la voie ECM principale, relative à la Vidéo, par exemple.

Les valeurs suivantes sont enfin fixées :
- Temps minimum d'inactivité : 15 secondes
- Retard de différé : 5 minutes,
- Crypto Période : 10 secondes,
- Le nombre de tuners du système de réception est limité à 2, permettant l'accès simultané à deux contenus, l'un en visualisation directe, l'autre en enregistrement sur la mémoire de masse du terminal.
- Période d'observation : 7 à 14 jours,

Sur la base des hypothèses ci-dessus et des usages connus, plusieurs profils d'utilisation licite et d'utilisation illicite d'un système de réception ont été élaborés. Pour pouvoir discriminer ces deux catégories de profils d'utilisation, la modélisation conduit à déterminer les valeurs suivantes des paramètres T_{Obs}, T_{ActMin} et S_{Max} :
- Le temps d'observation T_{Obs} est de 14 jours, soit 1209600 secondes.
- Une sollicitation de 0,22 ECM par seconde permet la discrimination recherchée avec une marge de sécurité qui ménage une large latitude de comportement à l'utilisateur licite d'un système de réception à un ou deux tuners. Le maximum de sollicitation licite S_{Max} est fixé à cette valeur.
- Le temps minimum d'activité T_{ActMin} est fixé à 30 heures, soit 108000 secondes.

Le procédé selon l'invention est mis en oeuvre par un processeur de sécurité comportant :
- un premier module pour analyser son utilisation pendant une période d'observation T_{obs} prédéfinie,
- un deuxième module pour déterminer à partir de ladite analyse la valeur moyenne M_{ECM} du nombre de sollicitations par unité de temps dudit processeur de sécurité pendant ladite période d'observation T_{Obs} et pour comparer ladite valeur moyenne M_{ECM} à un seuil Sₘₐₓ prédéfini, et
- un troisième module pour appliquer audit terminal une sanction dont le niveau de sévérité croît graduellement si la valeur moyenne M_{ECM} est supérieure au seuil Sₘₐₓ.

Ce processeur de sécurité met en oeuvre un logiciel comportant :
- des instructions pour analyser l'utilisation de ladite carte à puce par ledit terminal pendant une période d'observation T_{obs} prédéfinie,
- des instructions pour déterminer à partir de ladite analyse la valeur moyenne M_{ECM} du nombre de sollicitations par unité de temps de ladite carte à puce par ledit terminal pendant ladite période d'observation T_{obs} et pour comparer ladite valeur moyenne M_{ECM} à un seuil Sₘₐₓ prédéfini, et
- des instructions pour appliquer audit terminal une sanction dont le niveau de sévérité croît graduellement si la valeur moyenne M_{ECM} est supérieure au seuil Sₘₐₓ.

Le procédé a été décrit dans le cas où les ECM pris en compte dans le comptage et l'analyse sont des ECM traités avec succès, c'est à dire reconnus comme syntaxiquement corrects, authentiques, intègres et satisfaits par les droits ad hoc pour permettre l'accès aux contenus. En variante, le procédé peut également être mis en oeuvre en prenant en compte les ECM reconnus comme erronés par le processeur de sécurité notamment au titre de la syntaxe, de l'authenticité et/ou de l'intégrité. Cela permet d'intégrer significativement, dans l'analyse d'un usage abusif du processeur, les attaques par force brute par soumissions réitérées d'ECM volontairement incorrects. Dans ce cas l'étape 14 de la figure n'est pas exécutée et le procédé de la figure 1 se poursuit à l'étape 20.

## Revendications

1. Procédé de détection d'une utilisation anormale d'un processeur de sécurité sollicité par au moins un terminal de réception pour contrôler l'accès à un contenu numérique embrouillé fourni par au moins un opérateur audit terminal de réception dans lequel, chaque sollicitation du processeur de sécurité consiste à soumettre à celui-ci un message de contrôle d'accès ECM associé au contenu embrouillé et transportant un mot de contrôle CW et la description d'au moins une condition d'accès afin de fournir au terminal le mot de contrôle pour désembrouiller le contenu,
procédé comportant les étapes suivantes :
- analyser l'utilisation du processeur de sécurité pendant une période d'observation T_{obs} prédéfinie comportant une période d'activité T_{Act} dudit processeur de sécurité constituée par cumulation d'une pluralité de durées d'activité successives séparées par une durée minimale T_{InaMin} de période d'inactivité dudit processeur de sécurité,
- compter à partir de ladite analyse le nombre N_{Ecm} de messages ECM traités par le processeur de sécurité pendant la période d'activité T_{act},
- déterminer la valeur moyenne M_{ECM} du nombre de sollicitations par unité de temps dudit processeur de sécurité pendant ladite période d'activité T_{Act},
- comparer ladite valeur moyenne M_{ECM} à un seuil Sₘₐₓ prédéfini, et,
- si la valeur moyenne M_{ECM} est supérieure au seuil Sₘₐₓ, appliquer audit terminal une sanction dont le niveau de sévérité croît graduellement,
Procédé dans lequel, à une date courante t_{c}, le comptage du nombre N_{ECM} de messages ECM contemporains traités avec succès comporte les opérations suivantes :
- comparer la date t à la date (t_{C}-T_{Diff}), T_{Diff} représentant un retard minimal préalablement défini séparant la date t et la date courant t_{c},
- incrémenter le nombre N_{ECM} si la date (t_{c}-T_{Diff}) est inférieure ou égale à la date t de diffusion de ce message ECM, sinon maintenir le nombre N_{ECM} à la valeur courante,
- si la date t est comprise entre la date courante t_{c} et la date t_{C}+T_{InaMin}, incrémenter la période d'activité T_{Act} de la valeur (t-t_{C}), sinon maintenir la période d'activité T_{Act} à la valeur courante.

2. Procédé selon la revendication 1, dans lequel l'analyse de l'utilisation du processeur de sécurité est effectuée par un logiciel intégré audit processeur de sécurité.

3. Procédé selon la revendication 2, dans lequel ladite sanction comporte un premier niveau consistant en un blocage temporaire de la réception du contenu, un deuxième niveau consistant en un blocage de la réception du contenu avec obligation de contacter l'opérateur fournissant ledit contenu, et un troisième niveau consistant en un blocage définitif de la réception dudit contenu.

4. Procédé selon la revendication 1, dans lequel l'analyse de l'utilisation du processeur de sécurité comporte les opérations suivantes:
à la date courante t_{c},
- déterminer, d'une part, les messages ECM ayant une date de diffusion contemporaine de la date courante t_{c} et qui sont soumis au processeur de sécurité en vue d'une première utilisation d'un contenu, d'autre part, les messages ECM ayant une date de diffusion antérieure à la date courante t_{c} et qui sont soumis au processeur de sécurité en vue d'une réutilisation d'un contenu,
- compter le nombre N_{ECM} de messages ECM contemporains au moins tant que la période d'activité T_{Act} est inférieure à une durée minimale T_{ActMin} prédéfinie.

5. Procédé selon la revendication 4, dans lequel, à la date t_{c}, la détermination d'un message ECM ancien est réalisée par comparaison de la date t de diffusion de ce message ECM à la date (t_{C}-T_{Diff}), T_{Diff} représentant un retard minimal préalablement défini séparant la date t et la date t_{c}.

6. Procédé selon la revendication 1, dans lequel, au cours d'une période d'observation débutant à un instant t₀, l'analyse de l'utilisation du processeur de sécurité comporte les opérations suivantes :
- calculer le rapport M_{ECM} = N_{ECM}/T_{Act},
- vérifier si T_{Act} est supérieure ou égale à une durée T_{ActMin} prédéfinie et si M_{ECM} est supérieur à Sₘₐₓ,
si oui,
-- appliquer la sanction,
-- incrémenter le nombre n de sanctions et/ou le niveau de la sanction appliquée,
-- réinitialiser les valeurs N_{ECM}, T_{Act} et t_{O}. sinon,
-- déchiffrer le mot de contrôle CW,
- si la durée (t-t_{O}) est supérieure à la durée T_{Obs} de la période d'observation,
-- réinitialiser les valeurs de N_{ECM}, T_{Act} et t_{O}
- si la date t est supérieure à la date t_{C}
-- remplacer la date t_{C} par la date t.

7. Procédé selon l'une quelconque des revendications précédentes, dans lequel le paramétrage et l'activation de l'analyse sont programmables par l'opérateur par envoi de message EMM.

8. Procédé selon la revendication 7, dans lequel ledit message EMM transporte au moins un des paramètres suivants :
- la durée T_{Obs} de la période d'observation,
- la durée minimum d'activité T_{ActMin},
- le retard T_{Diff},
- la durée minimum d'inactivité T_{InaMin},
- la valeur du seuil Sₘₐₓ,
- la valeur du seuil N_{Buf}.

9. Processeur de sécurité destiné à contrôler l'accès à un contenu numérique embrouillé fourni par au moins un opérateur à au moins un terminal de réception comportant:
- un premier module pour analyser son utilisation pendant une période d'observation T_{obs} prédéfinie comportant une période d'activité T_{Act} dudit processeur de sécurité constituée par cumulation d'une pluralité de durées d'activité successives séparées par une durée minimale T_{InaMin} de période d'inactivité dudit processeur de sécurité,
- un deuxième module pour -compter à partir de ladite analyse le nombre N_{Ecm} de messages ECM traités par le processeur de sécurité pendant la période d'activité T_{act} et la valeur moyenne M_{ECM} du nombre de sollicitations par unité de temps dudit processeur de sécurité pendant ladite période d'observation T_{Obs} et pour comparer ladite valeur moyenne M_{ECM} à un seuil Sₘₐₓ prédéfini, chaque sollicitation du processeur de sécurité consistant à soumettre à celui-ci un message de contrôle d'accès ECM associé au contenu embrouillé et transportant un mot de contrôle CW et la description d'au moins une condition d'accès afin de fournir au terminal le mot de contrôle pour désembrouiller le contenu, et
- un troisième module pour appliquer audit terminal une sanction dont le niveau de sévérité croît graduellement si la valeur moyenne M_{ECM} est supérieure au seuil Sₘₐₓ, dans lequel, le premier module est configuré de sorte qu'à une date courante t_{c}, le comptage du nombre N_{ECM} de messages ECM contemporains traités avec succès comporte les opérations suivantes :
- comparer la date t à la date (t_{C}-T_{Diff}), T_{Diff} représentant un retard minimal préalablement défini séparant la date t et la date courant t_{c},
- incrémenter le nombre N_{ECM} si la date (t_{C}-T_{Diff}) est inférieure ou égale à la date t de diffusion de ce message ECM, sinon maintenir le nombre N_{ECM} à la valeur courante,
- si la date t est comprise entre la date courante t_{c} et la date t_{C}+T_{InaMin}, incrémenter la période d'activité T_{Act} de la valeur (t-t_{C}), sinon maintenir la période d'activité T_{Act} à la valeur courante.

10. Programme d'ordinateur comprenant des instructions pour l'exécution des étapes du procédé selon l'une des revendications 1 à 9 lorsque ledit programme est exécuté sur une carte à puce associée à un terminal de réception de contenus numériques fournis par un opérateur.

## Patentansprüche

1. Verfahren zur Erfassung einer anormalen Benutzung eines Sicherheitsprozessors, der durch wenigstens ein Empfangsterminal angefordert wird, um den Zugang zu einem unklaren digitalen Inhalt zu steuern, der durch wenigstens einen Operator an das Empfangsterminal geliefert wird, wobei jede Anforderung des Sicherheitsprozessors darin besteht, diesem eine ECM-Zugangssteuerungsnachricht vorzulegen, die dem unklaren Inhalt zugeordnet ist und ein Steuerungswort CW und die Beschreibung wenigstens einer Zugangsbedingung transportiert, um an das Terminal das Steuerungswort zum Klären des Inhalts zu liefern,
wobei das Verfahren die folgenden Schritte umfasst:
- Analysieren der Benutzung des Sicherheitsprozessors während einer vordefinierten Beobachtungsperiode T_{obs}, umfassend eine Aktivitätsperiode T_{Act} des Sicherheitsprozessors, gebildet durch Kumulation einer Mehrzahl von aufeinanderfolgenden Aktivitätsdauern, die separiert sind durch eine minimale Dauer T_{InaMin} einer Inaktivitätsperiode des Sicherheitsprozessors,
- Zählen der Zahl N_{Ecm} von ECM-Nachrichten, die durch den Sicherheitsprozessor während der Aktivitätsperiode T_{Act} behandelt werden, ausgehend von der Analyse,
- Bestimmen des Mittelwerts M_{ECM} der Zahl von Anforderungen des Sicherheitsprozessors pro Zeiteinheit während der Aktivitätsperiode T_{Act},
- Vergleichen des Mittelwerts M_{ECM} mit einer vordefinierten Schwelle Sₘₐₓ, und
- wenn der Mittelwert M_{ECM} größer als die Schwelle Sₘₐₓ ist, Anwenden einer Sanktion, deren Schärfegrad schrittweise zunimmt, auf das Terminal,
bei welchem Verfahren an einem momentanen Zeitpunkt t_{c} das Zählen der Zahl N_{ECM} von aktuellen ECM-Nachrichten, die erfolgreich behandelt werden, die folgenden Operationen umfasst:
- Vergleichen des Zeitpunkts t mit dem Zeitpunkt (t_{c}-T_{Diff}), wobei T_{Diff} eine vorher definierte minimale Verzögerung repräsentiert, die den Zeitpunkt t und den momentanen Zeitpunkt t_{c} separiert,
- Inkrementieren der Zahl N_{ECM}, wenn der Zeitpunkt (t_{c}-T_{Diff}) kleiner oder gleich dem Zeitpunkt t der Aussendung dieser ECM-Nachricht ist, und andernfalls Halten der Zahl N_{ECM} auf dem momentanen Wert,
- wenn der Zeitpunkt t enthalten ist zwischen dem momentanen Zeitpunkt t_{c} und dem Zeitpunkt t_{c}+T_{InaMin}, Inkrementieren der Aktivitätsperiode T_{Act} um den Wert (t-t_{c}), und andernfalls Halten der Aktivitätsperiode T_{Act} auf dem momentanen Wert.

2. Verfahren nach Anspruch 1, bei dem die Analyse der Benutzung des Sicherheitsprozessors durch eine in den Sicherheitsprozessor integrierte Software durchgeführt wird.

3. Verfahren nach Anspruch 2, bei dem die Sanktion ein erstes Niveau umfasst, bestehend aus einer vorübergehenden Blockierung des Empfangs des Inhalts, ein zweites Niveau, bestehend aus einer Blockierung des Empfangs des Inhalts mit der Verpflichtung, den Operator zu kontaktieren, der den Inhalt liefert, und ein drittes Niveau, das aus einer endgültigen Blockierung des Empfangs des Inhalts besteht.

4. Verfahren nach Anspruch 1, bei dem die Analyse der Benutzung des Sicherheitsprozessors die folgenden Operationen umfasst:
zum momentanen Zeitpunkt t_{c},
- Bestimmen einerseits der ECM-Nachrichten mit einem Aussendezeitpunkt, der hinsichtlich des momentanen Zeitpunkts t_{c} aktuell ist, und die dem Sicherheitsprozessor im Hinblick auf eine erste Benutzung eines Inhalts vorgelegt werden, andererseits der ECM-Nachrichten, die einen Aussendezeitpunkt haben, der vordem momentanen Zeitpunkt t_{c} liegt, und die dem Sicherheitsprozessor im Hinblick auf eine Wiederbenutzung eines Inhalts vorgelegt werden,
- Zählen der Zahl N_{ECM} von aktuellen ECM-Nachrichten wenigstens so lange, wie die Aktivitätsperiode T_{Act} kleiner als eine vordefinierte minimale Dauer T_{ActMin} ist.

5. Verfahren nach Anspruch 4, bei dem zum Zeitpunkt t_{c} die Bestimmung einer alten ECM-Nachricht durchgeführt wird durch Vergleich des Aussendezeitpunkts t dieser ECM-Nachricht mit dem Zeitpunkt (t_{c}-T_{Diff}), wobei T_{Diff} eine vorher definierte minimale Verzögerung repräsentiert, die den Zeitpunkt t und den Zeitpunkt t_{c} separiert.

6. Verfahren nach Anspruch 1, bei dem im Verlauf einer Beobachtungsperiode, die zu einem Zeitpunkt t₀ beginnt, die Analyse der Benutzung des Sicherheitsprozessors die folgenden Operationen umfasst:
- Berechnen des Verhältnisses M_{ECM} = N_{ECM}/T_{Act},
- Überprüfen, ob T_{Act} größer oder gleich einer vordefinierten Dauer T_{ActMin} ist, und ob M_{ECM} größer als Sₘₐₓ ist,
falls ja,
- - Anwenden der Sanktion,
- - Inkrementieren der Zahl n von Sanktionen und/oder des angewendeten Sanktionsniveaus,
- - Reinitialisieren der Werte N_{ECM}, T_{Act} und t₀,
andernfalls,
- - Entschlüsseln des Steuerungsworts CW,
- wenn die Dauer (t-t₀) größer als die Dauer T_{Obs} der Beobachtungsperiode ist,
- - Reinitialisieren der Werte von N_{ECM}, T_{Act} und t₀,
- wenn der Zeitpunkt t größer als der Zeitpunkt t_{c} ist,
- - Ersetzen des Zeitpunkts t_{c} durch den Zeitpunkt t.

7. Verfahren nach einem der vorhergehenden Ansprüche, bei dem die Parametrisierung und die Aktivierung der Analyse durch den Operator durch EMM-Nachrichtenversand programmierbar sind.

8. Verfahren nach Anspruch 7, bei dem die EMM-Nachricht wenigstens einen der folgenden Parameter transportiert:
- die Dauer T_{Obs} der Beobachtungsperiode,
- die minimale Aktivitätsdauer T_{ActMin},
- die Verzögerung T_{Diff},
- die minimale Inaktivitätsdauer T_{InaMin},
- den Wert der Schwelle Sₘₐₓ;
- den Wert der Schwelle N_{Buf}.

9. Sicherheitsprozessor, der zur Steuerung des Zugangs zu einem unklaren digitalen Inhalt ausgelegt ist, der durch wenigstens einen Operator an wenigstens ein Empfangsterminal geliefert wird, umfassend:
- ein erstes Modul zum Analysieren seiner Benutzung während einer vordefinierten Beobachtungsperiode T_{Obs}, umfassend eine Aktivitätsperiode T_{Act} des Sicherheitsprozessors, gebildet durch Kumulieren einer Mehrzahl von aufeinanderfolgenden Aktivitätsdauern, die durch eine minimale Dauer T_{InaMin} einer Inaktivitätsperiode des Sicherheitsprozessors separiert sind,
- ein zweites Modul zum Zählen der Zahl N_{Ecm} von ECM-Nachrichten, die durch den Sicherheitsprozessor während der Aktivitätsperiode T_{act} behandelt werden, und des Mittelwerts M_{ECM} der Zahl von Anforderungen des Sicherheitsprozessors pro Zeiteinheit während der Beobachtungsperiode T_{Obs} ausgehend von der Analyse, und zum Vergleichen des Mittelwerts M_{ECM} mit einer vordefinierten Schwelle Sₘₐₓ, wobei jede Anforderung des Sicherheitsprozessors darin besteht, diesem eine ECM-Zugangssteuerungsnachricht vorzulegen, die dem unklaren Inhalt zugeordnet ist und ein Steuerungswort CW und die Beschreibung wenigstens einer Zugangsbedingung transportiert, um an das Terminal das Steuerungswort zum Klären des Inhalts zu liefern, und
- ein drittes Modul zum Anwenden einer Sanktion auf das Terminal, deren Schärfegrad schrittweise zunimmt, wenn der Mittelwert M_{ECM} größer als die Schwelle Sₘₐₓ ist, wobei das erste Modul derart ausgelegt ist, dass an einem momentanen Zeitpunkt t_{c} das Zählen der Zahl N_{ECM} von aktuellen ECM-Nachrichten, die erfolgreich behandelt werden, die folgenden Operationen umfasst:
- Vergleichen des Zeitpunkts t mit dem Zeitpunkt (t_{c}-T_{Diff}), wobei T_{Diff} eine vorher definierte minimale Verzögerung repräsentiert, die den Zeitpunkt t und den momentanen Zeitpunkt t_{c} separiert,
- Inkrementieren der Zahl N_{ECM}, wenn der Zeitpunkt (t_{c}-T_{Diff}) kleiner oder gleich dem Zeitpunkt t der Aussendung dieser ECM-Nachricht ist, und andernfalls Halten der Zahl N_{ECM} auf dem momentanen Wert,
- wenn der Zeitpunkt t enthalten ist zwischen dem momentanen Zeitpunkt t_{c} und dem Zeitpunkt t_{c}+T_{InaMin}, Inkrementieren der Aktivitätsperiode T_{Act} um den Wert (t-t_{c}), und andernfalls Halten der Aktivitätsperiode T_{Act} auf dem momentanen Wert.

10. Computerprogramm, umfassend Befehle zum Ausführen der Schritte des Verfahrens nach einem der Ansprüche 1 bis 9, wenn das Programm auf einer Chipkarte ausgeführt wird, die einem Terminal zum Empfang von digitalen Inhalten zugeordnet ist, die durch einen Operator geliefert werden.

## Claims

1. Method of detecting abnormal use of a security processor invoked by at least one receiving terminal in order to control access to a scrambled digital content supplied by at least one operator to said receiving terminal wherein, each invocation of the security processor consists in presenting it with an ECM access control message associated with the scrambled content and carrying a control word CW and the description of at least one access condition in order to supply the terminal with the control word for unscrambling the content,
method **characterised in that** it comprises the following steps:
- analysing security processor use during a preset observation period T_{obs} comprising a period of activity T_{Act} of said security processor constituted by accumulating a plurality of successive periods of activity separated by a minimum period T_{InaMin} of inactivity of said security processor,
- counting on the basis of said analysis the number N_{Ecm} of ECM messages processed by the security processor during a period of activity T_{Act},
- determining the mean value M_{ECM} of the number of invocations per time unit of said security processor during said observation of activity T_{Act},
- comparing said mean value M_{ECM} with a preset threshold Sₘₐₓ, and
- if the mean value M_{ECM} is greater than the threshold Sₘₐₓ, applying to said terminal a sanction whereof the level of severity increases progressively,
wherein, at a current date t_{c}, counting the number N_{ECM} of successfully processed contemporary ECM messages comprises the following operations:
- comparing the date t with the date (t_{C}-T_{Diff}), T_{Diff} representing a previously specified minimum delay separating the date t and the date t_{c},
- increasing the number N_{ECM} if the date (t_{C}-T_{Diff}) is less than or equal to the transmission date t of said message, otherwise maintaining the number N_{ECM} at the current value,
- if the date t is between the date t_{C} and the date t_{C}+T_{InaMin}, increasing the period of activity T_{Act} by the value (t-t_{C}), otherwise maintaining the period of activity T_{Act} at the current value.

2. Method according to claim 1 wherein security processor use is analysed by software built into said security processor.

3. Method according to claim 2, wherein said sanction comprises a first level consisting in temporarily blocking content reception, a second level consisting in blocking content reception with a requirement to contact the operator supplying said content, and a third level consisting in permanently blocking reception of said content.

4. Method according to claim 1, wherein the analysis of security processor use comprises the following operations:
at the current date t_{c},
- determining on the one hand, the ECM messages with a distribution date contemporary with the current date t_{c} and which will be presented to the security processor for a first use of a content, on the other hand, the ECM messages with a distribution date which antedates the current date t_{c} and are presented to the security processor for re-using a content,
- counting the number N_{ECM} of contemporary ECM messages at least so long as the period of activity T_{Act} is less than a preset minimum duration T_{ActMin}.

5. Method according to claim 4, wherein, at the date t_{c}, an old ECM message is determined by comparing the distribution date t of this ECM message with the date (t_{C}-T_{Diff}), T_{Diff} representing a previously specified minimum delay separating the date t and the date t_{c}.

6. Method according to claim 1, wherein, during an observation period starting at an instant t₀, the analysis of security processor use comprises the following operations:
- calculating the relationship M_{ECM} = N_{ECM}/T_{Act},
- checking whether T_{Act} is greater than or equal to a preset duration T_{ActMin} and whether M_{ECM} is greater than Sₘₐₓ,
if yes,
-- applying the sanction,
-- increasing the number n of sanctions and/or the level of the sanction applied,
-- reinitialising the values N_{ECM}, T_{Act} and to.
otherwise,
-- decrypting the control word CW,
- if the duration (t-t_{O}) is greater than the duration T_{Obs} of the observation period,
-- reinitialising the values of N_{ECM}, T_{Act} and to
- if the date t is greater than the date t_{C}
-- replacing the date t_{C} by the date t.

7. Method according to any one of the previous claims, wherein analysis parameterisation and activation can be programmed by an operator by sending an EMM message.

8. Method according to claim 7, wherein said EMM message carries at least one of the following parameters:
- the duration T_{Obs} of the observation period,
- the minimum duration of activity T_{ActMin},
- the delay T_{Diff},
- the minimum duration of inactivity T_{InaMin},
- the threshold value Sₘₐₓ,
- the threshold value N_{Buf}.

9. Security processor intended to control access to a scrambled digital content supplied by at least one operator to at least one receiving terminal comprising:
- a first module for analysing its use during a preset observation period T_{obs} comprising a period of activity T_{Act} of said security processor constituted by accumulating a plurality of successive periods of activity separated by a minimum period T_{InaMin} of inactivity of said security processor,
- a second module for counting on the basis of said analysis the number N_{Ecm} of ECM messages processed by the security processor during a period of activity T_{Act} and the mean value M_{ECM} of the number of invocations per time unit of said security processor during said observation of activity T_{obs}, and for comparing said mean value M_{ECM} with a preset threshold Sₘₐₓ, each invocation of the security processor consists in presenting it with an ECM access control message associated with the scrambled content and carrying a control word CW and the description of at least one access condition in order to supply the terminal with the control word for unscrambling the content
- a third module for applying to said terminal a sanction whereof the level of severity progressively increases if the mean value M_{ECM} is greater than the threshold Sₘₐₓ, wherein, the first module is configured such as, at a current date t_{c}, counting the number N_{ECM} of successfully processed contemporary ECM messages comprises the following operations:
- comparing the date t with the date (t_{C}-T_{Diff}), T_{Diff} representing a previously specified minimum delay separating the date t and the date t_{c},
- increasing the number N_{ECM} if the date (t_{C}-T_{Diff}) is less than or equal to the transmission date t of said message, otherwise maintaining the number N_{ECM} at the current value,
- if the date t is between the date t_{C} and the date t_{C}+T_{InaMin}, increasing the period of activity T_{Act} by the value (t-t_{C}), otherwise maintaining the period of activity T_{Act} at the current value.

10. Computer program including program code instructions for implementing steps in the method according to one of the claims 1 to 9 when said programme is run on a security processor associated with a terminal provided by an operator.
